# EUROPEAN PATENT APPLICATION

(11) **EP 2 988 289 A1**
(43) Date of publication of application: **24.02.2016**
(21) Application number: 14181950.8
(22) Date of filing: 22.08.2014
(51) Int. Cl.: G09B 23/28

(54) **Medical procedure simulator**

(71) Applicant: Moog B.V., 2150 AD Nieuw-Vennep (NL)
(72) Inventor: Lammertse, Piet, 1181 SW Amstelveen (NL); Thalen, Bert, 2352 JK Leiderdorp (NL); Klaassen, Peter, 2014 TB Haarlem (NL)
(74) Representative: Jones, John Bryn

(57) **Abstract**

A medical simulator rest (106) has a model (116) mounted on a force sensing apparatus (118), which model (116) can be used as a hand rest providing force / displacement response to a simulation.

## Description

The present invention is concerned with a medical procedure simulator. More specifically, the present invention is concerned with a hand rest for use with an eye surgery simulator.

Simulators for medical procedures are known in the art, such as the applicant's Simodont (TM) dental trainer. Known simulators comprise a computer which controls the simulation and hosts a virtual environment, a VDU displaying the simulated environment, and one or two handpieces which may be connected to the computer to provide an input. There are two environments in this situation- a physical environment in which the operator can manipulate the inputs to the simulation, and a simulated, virtual environment.

The simulated environment comprises the subject, as well as virtual versions of tools controlled by the handpieces. The tools may be surgical instruments (scalpels, syringes etc.) or other devices (such as mirrors or probes). The handpieces are connected to sensors which determine their position, which is used to control the position of the tools in the virtual environment. The handpieces may be connected to a haptic feedback system which allows the computer to control the forces the user feels through the handpieces, making a more realistic simulation possible.

The haptic feedback system limits the travel of the handpieces (for example if the operator encounters an immovable structure in the virtual environment) and provides variable forces to simulate a real biological environment (for example the user may feel little resistance to an incision through skin, but more resistance through muscle or cartilage).

Certain surgical procedures are exceptions to this general rule. For example in eye surgery, the surgeon may approach the head from the top (as the patient is lying down). An ophthalmic microscope is focussed on the patient's eye, through which the surgeon looks at during the procedure. The surgeon can rest their hands on the patient's forehead to steady the hands for these delicate procedures. In real life surgery, the surgeon must adopt a relaxed posture and apply minimal force to the patient's head. Excessive force can (i) move the patient's head from side to side, thus misaligning the patient's eye with the video microscope; and, (ii) push the patient's head into the pillow, thus moving it out of focus of the video microscope. Both scenarios, resulting from incorrect posture, cause problems for accurate surgery.

A known eye surgery simulator is the VRMagic EyeSi (TM). This known simulator comprises a model of the patient's face, on the forehead of which the operator rests his or her hands during simulated surgery. In this prior art system, when used for training purposes, the posture of the operator needs to be visually assessed, which is problematic as it requires constant supervision by a trained professional. What is required is a simulator which can provide real-time feedback of the operator's posture.

The present invention aims to overcome this problem.

According to a first aspect of the invention there is provided a medical procedure simulator comprising:
a computer configured to run medical simulation software to simulate a medical procedure;
at least one handpiece configured to be held in the hand of a user and manipulated by the user in a real space, which handpiece is configured to provide position and / or force data to the computer as an input to the simulated medical procedure;
a rest comprising a surface proximate the real space for the user to rest his or her hand or arm whilst holding the handpiece;
a sensing apparatus connected to the rest;
wherein the sensing apparatus is configured to sense a force applied to and / or a displacement of the rest and provide such force and / or displacement to the computer as an input to the simulated medical procedure.

Advantageously, the present invention allows the posture of the operator to be both measured and assessed through real-time feedback in the simulation environment. This mitigates the need for visual assessment.

Preferably the rest comprises a model of a biological structure defining the surface. More preferably the model is a human head model, and the real space is the region proximate the model where the human eye would be. This makes the simulation more realistic.

In the event that eye surgery is contemplated, the computer comprises a VDU displaying the human eye during the simulated medical procedure. If the sensing apparatus is configured to sense force and / or displacement in the anteroposterior axis of the human head model, in response to anteroposterior force and / or displacement, the displayed human eye is brought into and out of focus on the VDU. In response to anteroposterior force and / or displacement, the displayed human eye may also be moved along the vertical axis of the human body in order to simulate a rotation about the neck. Alternatively, or additionally, the sensing apparatus is configured to sense force and / or displacement in the mediolateral axis of the human head model, and in response to mediolateral force and / or displacement, the displayed human eye is displaced to the left and / or right on the VDU.

The sensing apparatus may comprise a force sensor, or more preferably two force sensors arranged to sense forces in two perpendicular directions. Preferably the force sensor or sensors each comprises an elastically deformable member and a strain gauge attached to the elastically deformable member to measure the deformation thereof.

In the event that a human head model is used, it may have a first side and a second side defining a set of human facial features, and having:
a first position in which the first set of human facial features faces the user, and the handpiece has a range of motion extending over a left hand side of the set of human facial features; and,
a second position in which the second set of human facial features faces the user, and the handpiece has a range of motion extending over a right hand side of the set of human facial features. To enable movement between the first and second positions, the human head model may be rotatable about an axis offset from the sagittal plane. Advantageously, this allows the simulator to be used on different eyes when the handpieces have a limited range of useful motion.

According to a second aspect of the invention there is provided a method of simulating a medical procedure undertaken by an operator, the method comprising the steps of:
providing a computer;
providing a rest having a surface and a sensing apparatus;
running a medical simulation on the computer;
resting a part of the operator's body on the rest whilst the simulation is running;
measuring the force upon, or displacement of, the rest during the simulation to generate position and / or force data;
providing the position and / or force data to the computer as an input to the simulation.

Preferably the method comprises the further steps of:
providing at least one handpiece having a force and / or displacement sensor;
manipulating the handpiece with a hand of the operator, whilst resting part of the hand, or arm connected to the hand, on the rest;
using data from the force and / or displacement sensor of the handpiece as an input to the simulation.

Preferably the medical simulation is an eye surgery simulation;
the rest comprises a model of part of a human head;
the step of measuring comprises the step of measuring the force upon, or displacement of, the rest in the anteroposterior direction of the human head; and,
the method comprises the steps of:
   providing a VDU displaying a simulated human eye during the simulation;
   in response to force and / or displacement in the anteroposterior direction, the simulated eye is brought into and out of focus on the VDU.

Alternatively, or in addition, the step of measuring comprises the step of measuring the force upon, or displacement of, the rest in the mediolateral direction of the human head; and,
the method comprises the steps of:
providing a VDU displaying a simulated human eye during the simulation;
in response to force and / or displacement in the mediolateral direction, the simulated eye is displaced to the left and / or right on the VDU.

A medical simulator and handpiece according to the present invention will now be described with reference to the following figures in which:
Figure 1 is a schematic view of a simulator comprising a rest in accordance with the present invention;
Figure 2 is a perspective view of a rest in accordance with the present invention;
Figure 3 is a perspective view of a part of the rest of Figure 2; and,
Figure 4 is a rear view of the part of the rest shown in Figure 3.

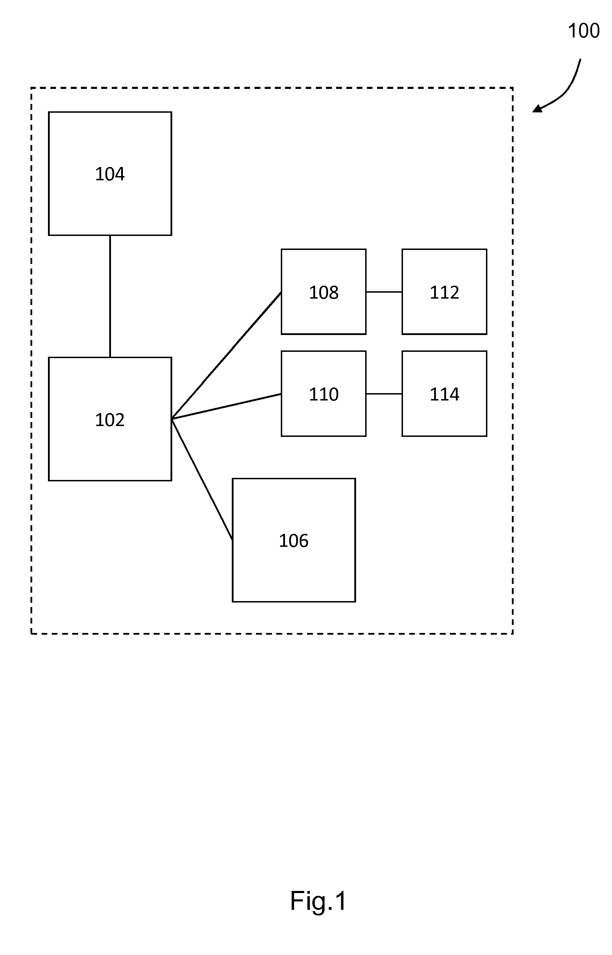

Figure 1 is a schematic view of an eye surgery simulator 100. The simulator 100 comprises a computer 102 having a memory and a processor. The processor is arranged to execute software stored on the memory, in particular software configured to simulate a medical procedure such as eye surgery. The computer 102 is connected to a VDU 104, a rest 106 and a first and second haptic system 108, 110.

The VDU is arranged to have two individual outputs mounted behind respective eyepieces, much like an ophthalmic microscope.

The haptic systems 108, 110 each comprise a first and second handpiece 112, 114 respectively. The haptic systems 108, 110 and handpieces 112, 114 will not be described in detail. Generally speaking the haptic systems 108, 110 are configured to monitor the position of, and provide force feedback to, the handpieces 112, 114 respectively. As the user manipulates the handpieces 112, 114, the computer 102 moves virtual tools within the virtual environment, and can provide feedback to the operator.

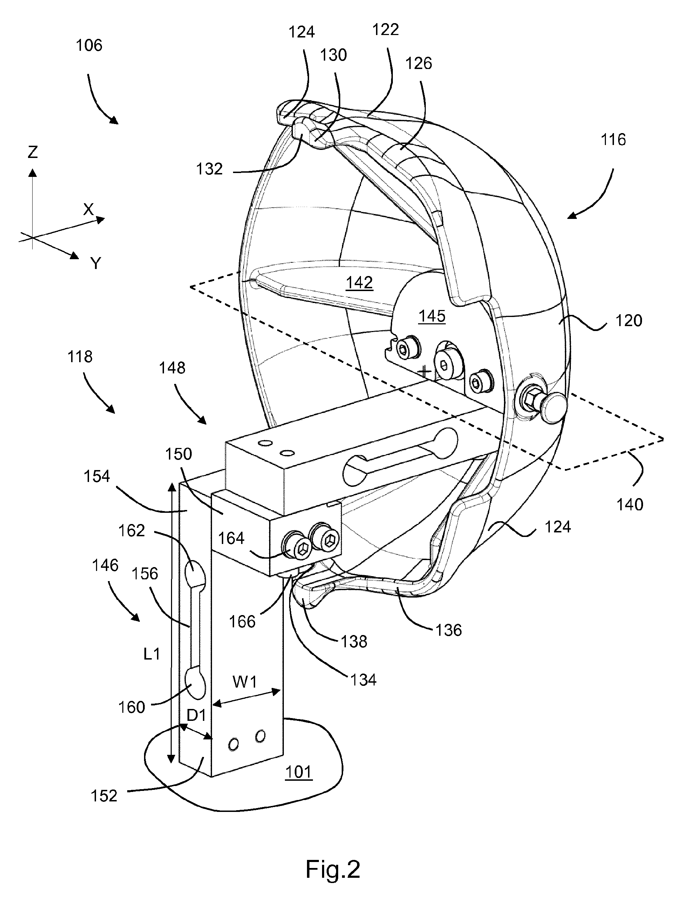

The rest 106 is shown in more detail in Figure 2. Global axes X, Y, Z are defined for the rest 106 in use. The X direction is the vertical axis of the subject's body when standing, the direction from the feet to the head being positive. The Y direction is side-to-side, and the Z direction is the fore-aft axis of the subject.

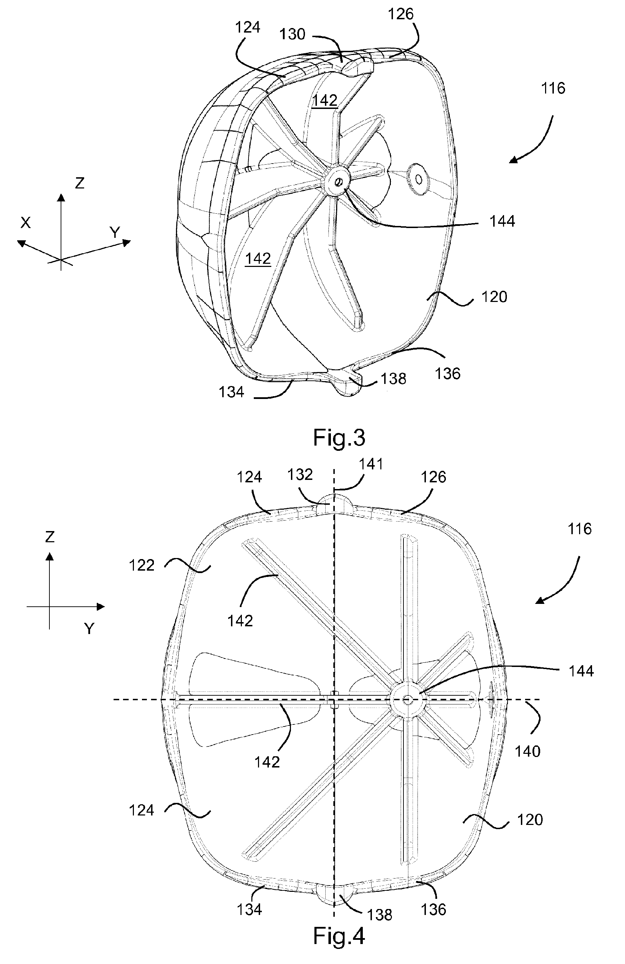

The rest 106 comprises a head model 116 and a sensing/mounting structure 118. The head model 116 is shown in more detail in Figures 3 and 4 and represents the outer portion of part of a human head and comprises a hollow, concave shell 120 being generally semi-ellipsoid in shape. The shell 120 is bisected by a frontal plane 140 defining an anterior region 122 and a posterior region 124 opposite thereto. A sagittal plane 141 is also shown in Figure 4 bisecting the shell 120. At the edge of the anterior region 122 there are defined a right and left anterior eye socket edge regions 124, 126 respectively between which there is disposed an upper nose projection 130 having a free end 132 and lying on the sagittal plane 141. The exterior facing surface of the shell 120, in particular in the region of the eyes and nose portion, represents the outer profile of the upper part of a human face bisected by the sagittal plane 141. The model 116 includes some external shaping for the various soft tissues overlaying the skull.

Turning to the posterior region of the shell 120, a left and a right posterior eye socket edge region 134, 136 respectively are provided with an upper nose projection 138 extending therebetween, coincident with the sagittal plane 141. As such, the shell 120 is generally symmetrical about the frontal plane 140 separating the anterior and posterior regions 122, 124.

Stiffening ribs 142 are provided within the shell 120 to stiffen it. A mounting formation 144 in the form of a boss 144 is provided at the centre of the ribs 142. The boss 144 lies on the frontal plane 140 (that is it is halfway between the anterior and posterior regions 122, 124), but is offset from the sagittal plane 141 - specifically it is aligned between the right anterior eye socket region 126 and the left posterior eye socket region 136.

Referring back to Figure 2, a mounting structure 145 is provided to mount the boss 144. Turning to the sensing/mounting structure 118, there is provided a first force sensor 146 connected to a second force sensor 148 via a joint 150. The first and second force sensors are connected in series.

The first force sensor 146 is an elongate cuboid having a first end 152 and a second end 154. The force sensor 146 has a depth D1, a width W1 and a length L1. The width W1 is larger than the depth D1, and the length L1 is larger than the width W1. An open slot 156 extends through the width W1 of the first force sensor 146. The open slot 156 extends partway along the length L1 of the force sensor 146. The open slot 156 has a generally rectangular cross-section 158 and is terminated in two cylindrical cross-sections 160, 162 at either end. These act to eliminate stress concentrations in the material of the force sensor.

The second force sensor 148 is substantially identical to the first force sensor 146 (although oriented at a different angle thereto in use) and as such, will not be described in detail.

Strain gauges (not shown) are positioned on the surfaces of the force sensors 146, 148 in order to measure the elastic deformation thereof under loading. It will be noted that the area of the first force sensor in the region of the slot 156 is reduced in the XY plane. As such, the second moment of area of the first force sensor 146 about the axis X is lower than about the other two axis. As such, the force sensor 146 undergoes a relatively high degree of elastic deformation about X, which the strain gauge can detect signifying the degree of force applied across the sensor, in particular in the Y direction at the second end 154 of the force sensor 146 (i.e., a bending moment about X). Once calibrated, the strain gauge readings can be converted into force exerted on the end of the sensor.

Similarly, the second force sensor 148 has a relatively low second moment of area about the Y axis and, as such, forces in the Z direction will cause significant degrees of elastic bending about the Y axis of the second force sensor 148, which can be measured by the strain gauge.

The joint 150 comprises a first attachment formation 164 and a second attachment formation 166, at 90 degrees to the first.

In use, the rest 106 is assembled as follows.

The first force sensor 146 is mounted at its first end 152 to a base 101. The first force sensor 146 extends in the global Z direction as shown in Figure 2. At the second end 154 of the first force sensor 146, the joint 150 is provided. The first attachment formation 164 is attached to the second end 154 of the first force sensor 146. The second force sensor 148 is also attached to the joint 150 by the second attachment formation 166. The second force sensor 148 extends perpendicularly to the first force sensor 146 and in the X direction. It will be noted that the first and second force sensors 146, 148 are not in direct contact and are instead joined by a single force path through the joint 150.

The second force sensor 148 is connected to the mounting formation 145 of the head model 116, which is attached to the boss 144. That the "face" of the model 116 and in particular of the anterior region 122, points in the +Z direction. As such, the posterior region and the face defined thereon point in the -Z direction.

As such, the first and second force sensors 146, 148 are capable of measuring forces exerted on the model 116 in the Y and Z directions respectively.

In use, the surgeon approaches the head model 116 from the +Z direction towards the -Z direction as shown in Figure 2. During surgery the surgeon will grip the handpieces 112, 114 and operate them in the space where the subject's left eye would normally be (i.e., in the region proximate the left anterior eye socket edge region 126).

It will be noted that the workspace of the handpieces 112, 114 is in the region of the second anterior eye socket edge region 126.

The surgeon is able to rest his or her lower arms or hands on the outer surface of the shell 120 and in particular in the anterior region in the configuration shown in Figure 2.

Should the surgeon apply an excessive force upon the head model 116 in the -Z direction, then the second force sensor 148 will detect this force which is fed back to the computer 102. The computer then takes two actions- firstly it de-focusses the image on the VDU 104 to simulate the subject moving out of focus (as would occur in reality). Secondly, the eye will move in the X direction because the force, in reality, tends to tilt the head back about the neck.

Similarly, should an excessive force in the + or - Y direction be felt by the first force sensor 146, then the computer 102 can move the simulated eye in the VDU 104 to reflect the simulated result of the excessive force application.

The simulator 100 will also provide visual (via the VDU) and / or audio instruction of how to rectify the problem. In the event that excessive force in the -Z direction is applied, the computer 102 instructs the user to relax his or her hands, which will result in the image on the VDU being refocussed and repositioned. In the event that excessive force in the + or -Y directions, the user will be instructed to push the head back towards its original position to restore the image.

Should the user wish to operate on a right eye, then the model 116 can be rotated by 180 degrees about the X axis such that the posterior region 124 faces the user. Because the boss 144 is offset from the sagittal plane 141, once rotation is complete, the workspace of the handpieces 112, 114 is in the region of the right posterior eye socket edge region 166.

Variations fall within the scope of the present invention. Instead of two force sensors, a single force sensor, or three force sensors could be provided to measure the forces applied by the operator in each of the X, Y and Z directions. In the above example, for eye surgery it is the forces in the Z and Y directions which are the most important and most commonly encountered in that type of surgery.

Any other type of force sensor, or displacement sensor, can be used in the present invention. For example measurement of force or displacement in the rotational sense could be measured.

It is envisaged that a similar type of system could be used for any other type of surgery, particularly those types in which the surgeon places part of his body on the subject. For example, any type of facial surgery or dentistry would benefit from the present invention.

The head model 116 can be made more realistic, for example the addition of a layer of softer material over the hard shell 120 to simulate muscle cartilage and/or skin, and in addition hair could be provided on the model to provide a more realistic environment for the operator.

## Claims

1. A medical procedure simulator (100) comprising:
a computer (102) configured to run medical simulation software to simulate a medical procedure;
at least one handpiece (112, 114) configured to be held in the hand of a user and manipulated by the user in a real space, which handpiece is configured to provide position and / or force data to the computer (102) as an input to the simulated medical procedure;
a rest (106) comprising a surface (120) proximate the real space for the user to rest his or her hand or arm whilst holding the handpiece;
a sensing apparatus (118) connected to the rest (106);
wherein the sensing apparatus (118) is configured to sense a force applied to and / or a displacement of the rest and provide such force and / or displacement to the computer as an input to the simulated medical procedure.

2. A medical procedure simulator (100) according to claim 1, in which the rest (106) comprises a model (116) of a biological structure defining the surface.

3. A medical procedure simulator (100) according to claim 2, in which the model (116) is a human head model, and the real space is the region proximate the model where the human eye would be.

4. A medical procedure simulator (100) according to claim 3, in which the computer comprises a VDU (104) displaying the human eye during the simulated medical procedure.

5. A medical procedure simulator (100) according to claim 4, in which the sensing apparatus (118) is configured to sense force and / or displacement in the anteroposterior axis of the human head model, and in response to anteroposterior force and / or displacement, the displayed human eye is brought into and out of focus on the VDU (104).

6. A medical procedure simulator (100) according to claim 3 or 4, in which the sensing apparatus (118) is configured to sense force and / or displacement in the mediolateral axis of the human head model, and in response to mediolateral force and / or displacement, the displayed human eye is displaced to the left and / or right on the VDU (104).

7. A medical procedure simulator (100) according to any preceding claim, in which the sensing apparatus (118) comprises a force sensor (146, 148).

8. A medical procedure simulator (100) according to claim 7, in which the sensing apparatus comprises two force sensors(146, 148) arranged to sense forces in two perpendicular directions (Y, Z).

9. A medical procedure simulator (100) according to claim 7 or 8, in which the force sensor or sensors (146, 148) each comprises an elastically deformable member and a strain gauge attached to the elastically deformable member to measure the deformation thereof.

10. A medical procedure simulator (100) according to claim 3, in which the human head model (116) has a first side (122) and a second side (124), each defining a set of human facial features, and having:
a first position in which the first set of human facial features faces the user, and the handpiece has a range of motion extending over a left hand side of the set of human facial features; and,
a second position in which the second set of human facial features faces the user, and the handpiece has a range of motion extending over a right hand side of the set of human facial features.

11. A medical procedure simulator (100) according to claim 10, in which the human head model (116) is rotatable about an axis offset from the sagittal plane.

12. A method of simulating a medical procedure undertaken by an operator, the method comprising the steps of:
providing a computer (102);
providing a rest (106) having a surface and a sensing apparatus (118);
running a medical simulation on the computer;
resting a part of the operator's body on the rest whilst the simulation is running;
measuring the force upon, or displacement of, the rest during the simulation to generate position and / or force data;
providing the position and / or force data to the computer as an input to the simulation.

13. A method of simulating a medical procedure according to claim 11, comprising the further steps of:
providing at least one handpiece (112, 114) having a force and / or displacement sensor;
manipulating the handpiece with a hand of the operator, whilst resting part of the hand, or arm connected to the hand, on the rest;
using data from the force and / or displacement sensor of the handpiece as an input to the simulation.

14. A method of simulating a medical procedure according to claim 11 or 12, in which:
the medical simulation is an eye surgery simulation;
the rest comprises a model of part of a human head (116);
the step of measuring comprises the step of measuring the force upon, or displacement of, the rest in the anteroposterior direction of the human head (Z); and,
the method comprises the steps of:
providing a VDU displaying a simulated human eye during the simulation;
in response to force and / or displacement in the anteroposterior direction, the simulated eye is brought into and out of focus on the VDU.

15. A method of simulating a medical procedure according to any of claims 12 to 14, in which:
the medical simulation is an eye surgery simulation;
the rest comprises a model of part of a human head (116);
the step of measuring comprises the step of measuring the force upon, or displacement of, the rest in the mediolateral direction of the human head (Y); and,
the method comprises the steps of:
providing a VDU displaying a simulated human eye during the simulation;
in response to force and / or displacement in the mediolateral direction, the simulated eye is displaced to the left and / or right on the VDU.
